# EUROPEAN PATENT SPECIFICATION

(11) **EP 4 007 235 B1**
(45) Date of publication and mention of the grant of the patent: **20.08.2025**
(21) Application number: 21207226.8
(22) Date of filing: 09.11.2021
(51) Int. Cl.: H04L 41/122, H04L 41/0806, H04L 41/0895, H04L 41/40, H04L 43/0805, H04L 43/20, H04L 45/02, H04L 45/00, H04L 45/28, H04L 43/0829

(54) **ROUTE ADVERTISEMENT METHOD, ROUTE GENERATION METHOD, AND DEVICE**
ROUTENANZEIGEVERFAHREN, ROUTENERZEUGUNGSVERFAHREN UND VORRICHTUNG
PROCÉDÉ D'ANNONCE DE ROUTE, PROCÉDÉ DE GÉNÉRATION DE ROUTE ET DISPOSITIF

(30) Priority: 30.11.2020 CN 202011375381
(43) Date of publication of application: 01.06.2022
(73) Proprietor: Huawei Technologies Co., Ltd., Shenzhen, Guangdong 518129 (CN)
(72) Inventor: WANG, Haibo, Guangdong, 518129 (CN); ZHUANG, Shunwan, Guangdong, 518129 (CN); YAN, Gang, Guangdong, 518129 (CN)
(74) Representative: MERH-IP Matias Erny Reichl Hoffmann Patentanwälte PartG mbB

(56) References cited:
- EP-A1- 3 410 656
- EP-A1- 3 832 957
- EP-A1- 3 886 379
- WO-A1-2020/052230
- WO-A1-2020/107977
- US-A1- 2008 228 940

## Description

### TECHNICAL FIELD

This application relates to the communication field, and in particular, to a route advertisement method, a route generation method, and a device.

### BACKGROUND

To implement packet forwarding, network devices perform route learning by performing route advertisement, to obtain a routing information base (routing information base, RIB), and then generate, according to the routing information base, a forwarding information base (forwarding information base, FIB) used to guide packet forwarding. When a packet cannot reach a network device because the network device is faulty or a link to the network device is faulty, a route to the network device generated by another network device needs to be withdrawn to avoid a packet loss. In addition, because the network device cannot transmit the packet to a downstream device, not only the route to the network device needs to be withdrawn, but also a route to the downstream device of the network device needs to be processed.

According to a conventional route withdrawal method, an upstream network device detecting that the network device is faulty sends, to the another network device, a route withdrawal message used to withdraw the route to the network device, and a route withdrawal message used to withdraw the route to the downstream device of the network device. The network device can perform route convergence on the corresponding routes only after receiving the route withdrawal messages. Consequently, convergence efficiency is low, and a packet loss rate is high.

WO 2020/107977 A1 discloses a path construction method and a related device. One of the methods comprises: a second PE node issuing a first VPN route to a first PE node by means of an MP-BGP signalling channel, so that the first PE node determines, according to a first transmission path descriptor (TPD) carnied in the received first VPN route, a label forwarding path reaching a first VPN Prefix, wherein the first TPD is used for identifying a label forwarding path for a first VPN message to reach a BGP next hop.

### SUMMARY

Embodiments of the present invention are defined by the independent claims. Additional features of embodiments of the invention are presented in the dependent claims. In the following, parts of the description and drawings referring to former embodiments which do not necessarily comprise all features to implement embodiments of the claimed invention are not represented as embodiments of the invention but as examples useful for understanding the embodiments of the invention.

Embodiments of this application provide a route advertisement method, a route generation method, and a device, to improve route convergence efficiency and reduce a packet loss rate.

### BRIEF DESCRIPTION OF DRAWINGS

FIG. 1 is a schematic diagram of a network architecture of a data center network according to an embodiment of this application;
FIG. 2 is a schematic flowchart of route advertisement and generation methods according to an embodiment of this application;
FIG. 3 is a schematic diagram of a structure of a first network device 300 according to an embodiment of this application;
FIG. 4 is a schematic diagram of a structure of a second network device 400 according to an embodiment of this application;
FIG. 5 is a schematic diagram of a structure of a network device 500 according to an embodiment of this application; and
FIG. 6 is a schematic diagram of a structure of a network device 600 according to an embodiment of this application.

### DETAILED DESCRIPTION OF EMBODIMENTS

According to a conventional route withdrawal method, an upstream network device detecting that a network device is faulty sends, to another network device, a route withdrawal message used to withdraw a route to the network device, and a route withdrawal message used to withdraw a route to a downstream network device of the network device. The network device can perform route convergence on the corresponding routes only after receiving the route withdrawal messages. Consequently, convergence efficiency is low.

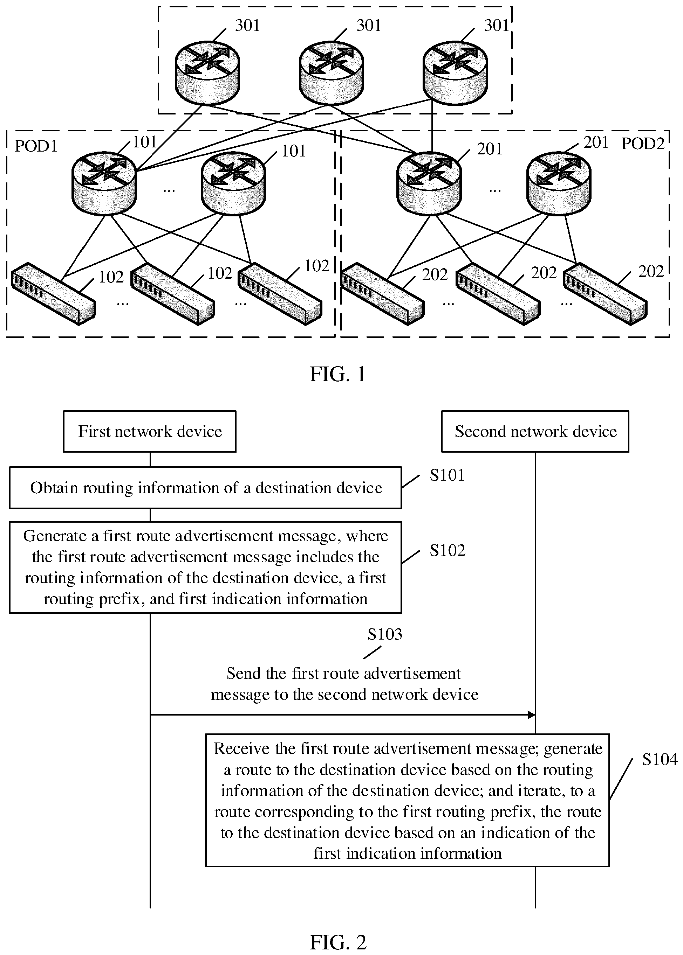

For example, FIG. 1 is a schematic diagram of a network architecture of a data center network (data center network, DCN).

In FIG. 1, the network architecture includes two points of delivery (points of delivery, PoDs): a POD 1 and a POD 2. The POD 1 includes a plurality of spine (spine) nodes 101, and each spine node 101 communicates with a plurality of leaf (leaf) nodes 102. The POD 2 includes a plurality of spine nodes 201, and each spine node 201 communicates with a plurality of leaf nodes 202. The spine nodes 101 of the POD 1 communicate with the spine nodes 201 of the POD 2 through one or more groups of core (core) nodes (one group is used as an example in FIG. 1). Each group of core nodes includes one or more core nodes 301. Each core node 301 is connected to one spine node 101 and one spine node 201.

The leaf nodes, the spine nodes, and the core nodes may be network devices such as routers (routers) or switches (switches).

In the conventional manner, it is assumed that a core node 301 detects that a spine node 101 is faulty or a link between the core node 301 and the spine node 101 is faulty, that is, the spine node 101 cannot forward a packet from a leaf node 202 to a leaf node 102. In this case, the core node 301 needs to withdraw routes learned from the spine node 101 and the leaf node 102, and needs to send, to a spine node 201, a route withdrawal message used to withdraw a route to the spine node 101 and a route withdrawal message used to withdraw a route to the leaf node 102. After receiving the route withdrawal messages, the spine node 201 withdraws the route to the spine node 101 and the route to the leaf node 102, and sends, to a leaf node 202, the route withdrawal message used to withdraw the route to the spine node 101 and the route withdrawal message used to withdraw the route to the leaf node 102, so that the leaf node 202 processes the corresponding routes. Other nodes follow the same rule until routes of an entire link are withdrawn.

It can be learned that, in a route withdrawal process in the conventional technology, route convergence can be performed on the corresponding routes only after the route withdrawal messages are received. However, a packet loss may occur in the process, affecting service transmission.

To resolve the foregoing technical problem, embodiments of this application provide a route advertisement method, a route generation method, and a device, to improve route convergence efficiency.

FIG. 2 is a schematic flowchart of route advertisement and generation methods according to an embodiment of this application.

The route advertisement method provided in this embodiment of this application includes the following steps.

S101: A first network device obtains routing information of a destination device.

In this embodiment of this application, the first network device may be any physical or virtual device that has a route forwarding function, for example, a router or a switch. If this embodiment of this application is applied to a data center network, the first network device may be a core node, a spine node, a leaf node, or the like. For example, the first network device may be one of the spine node 101, the leaf node 102, the core node 301, or the spine node 201 in FIG. 1. For ease of description, an example in which the first network device is the spine node 101 is used below for description.

The destination device may be any physical or virtual device that has a route forwarding function, for example, a router or a switch; or may be a terminal device or a server. The terminal device may also be referred to as user equipment (user equipment, UE), a mobile station (mobile station, MS), a mobile terminal (mobile terminal, MT), a terminal, or the like, and is a device that provides voice and/or data connectivity for a user, or a chip disposed in the device, for example, a handheld device or a vehicle-mounted device having a wireless connection function. Currently, some examples of the terminal device are a mobile phone, a desktop computer, a tablet, a laptop, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), a 5G residential gateway (5G residential gateway, 5G-RG), or the like.

If this embodiment of this application is applied to the data center network, the destination device may be a spine node, a core node, a leaf node, or a downstream terminal device or server of the leaf node. For example, the destination device may be one of the spine node 101, the leaf node 102, a downstream terminal device or server (which is not shown in FIG. 1) of the leaf node 102, or the core node 301 in FIG. 1. For ease of description, an example in which the destination device is the leaf node 102 is used below for description. The leaf node 102 may be, for example, a top of rack (Top of Rack, TOR) switch.

In this embodiment of this application, the destination device may be considered as a downstream device of the first network device. To send a packet to the destination device, the first network device needs to obtain routing information of the destination device and generate a route to the destination device based on the routing information of the destination device. If the destination device is a forwarding device, for example, a router or a switch, the destination device may advertise the routing information of the destination device to the first network device, so that the first network device can obtain the routing information. The routing information of the destination device may include information such as a routing prefix of the destination device and an autonomous system (autonomous system, AS) in which the destination device is located.

In addition to generating the route to the destination device, the first network device may further advertise, to an upstream network device, for example, a second network device, a learned route to the destination device. For details, refer to S102 and S103.

S102: The first network device generates a first route advertisement message, where the first route advertisement message includes the routing information of the destination device, a first routing prefix, and first indication information.

In this embodiment of this application, the first network device generates the first route advertisement message, where the first route advertisement message may be a BGP update message. The first route advertisement message includes the routing information of the destination device, the first routing prefix, and the first indication information. The first route advertisement message is used to indicate the second network device to generate the route to the destination device based on the routing information of the destination device, the first routing prefix, and the first indication information.

The first routing prefix in the first route advertisement message may be a loopback address of the first network device, a physical interface address of the first network device, or a routing prefix corresponding to a route received by the first network device. This is not specifically limited in this embodiment of this application. The loopback address is an address of a loopback interface.

The first indication information is used to indicate the second network device to iterate the route to the destination device to a route corresponding to the first routing prefix in the first route advertisement message. In the route iterating process, the second network device may use, based on an indication of the first indication information, an outbound interface of the route corresponding to the first routing prefix as an outbound interface of forwarding information of the route to the destination device. The outbound interface may be a physical interface or a virtual interface. Optionally, the second network device may further use, based on the indication of the first indication information, a next hop of the route corresponding to the first routing prefix as a next hop of the forwarding information of the route to the destination device. The forwarding information is information in an FIB, including a destination address, a next hop, an outbound interface and the like.

In this embodiment of this application, the route corresponding to the first routing prefix may be a first-type route. The first-type route may be referred to as, for example, a base route. The route to the destination device may be a second-type route. The second-type route may be referred to as, for example, a hierarchical route. The indication of the first indication information may also be expressed as that the second-type route depends on the first-type route. Both the first-type route and the second-type route may be BGP routes.

In this embodiment of this application, the first routing prefix and the first indication information may be carried in a TLV of the first route advertisement message. For example, a value of a type in the TLV is hierarchical convergence (Hierarchy Convergence), indicating that the TLV is a TLV used to indicate an attribute of the routing information in the first route advertisement message. A value of V in the TLV may include two parts: One part is the first routing prefix, and the other part is the first indication information. The two parts are expressed by using a hierarchical route (Hierarchy Route), and mean whether the route to the destination device depends on a prefix route.

For example, the spine node 101 obtains routing information of the leaf node 102 and a loopback address 1.1.1.1/32 of the spine node 101, and the routing information of the leaf node 102 includes a routing prefix 10.1.1.0/24 of the leaf node 102. The spine node 101 generates the first route advertisement message. The first route advertisement message includes the routing information of the leaf node 102, the loopback address 1.1.1.1/32 of the spine node 101, and the first indication information. The first indication information indicates that a route to the leaf node 102 depends on a route corresponding to the loopback address 1.1.1.1/32 of the spine node 101. In other words, the first indication information indicates the second network device to iterate the route to the leaf node 102 to the route corresponding to the loopback address 1.1.1.1/32 of the spine node 101.

S103: The first network device sends the first route advertisement message to the second network device.

In this embodiment of this application, the second network device may be any physical or virtual device that has a route forwarding function, for example, a router or a switch. If this embodiment of this application is applied to the data center network, the second network device may be a core node, a spine node, or a leaf node. For example, the second network device may be one of the spine node 101, the core node 301, the spine node 201, or the leaf node 202 in FIG. 1. For ease of description, an example in which the second network device is the core node 301 is used below for description.

S104: The second network device receives the first route advertisement message; generates the route to the destination device based on the routing information of the destination device; and iterates, to the route corresponding to the first routing prefix, the route to the destination device based on the indication of the first indication information.

Specifically, after receiving the first route advertisement message, the second network device matches for the corresponding route based on the indication of the first indication information and the first routing prefix, and determines an outbound interface from the route. The match for the corresponding route based on the first routing prefix may be an exact match or a longest match. The exact match is searching for a route whose routing prefix has the same address and mask as those of the first routing prefix. The longest match is searching for a route whose routing prefix has a longest mask and the same address as that of the first routing prefix.

For example, if the first routing prefix is 1.1.1.1/24, the exact match is searching for a route whose routing prefix is 1.1.1.1/24, and the longest match is searching for a route whose routing prefix has an address 1.1.1.1 and a longest mask. For example, the route whose routing prefix is 1.1.1.1/32 can be found based on the first routing prefix 1.1.1.1/24.

After determining the outbound interface of the route corresponding to the first routing prefix, the second network device may generate the route to the destination device based on the outbound interface and the routing information of the destination device. The route to the destination device includes first forwarding information, and the first forwarding information includes an outbound interface. The outbound interface of the first forwarding information is the outbound interface of the route matching the first routing prefix. Optionally, the first forwarding information further includes a next hop. The second network device may set the next hop of the first forwarding information as the next hop of the route corresponding to the first routing prefix.

For example, after receiving the first route advertisement message from the spine node 101, the core node 301 determines a route corresponding to the routing prefix 1.1.1.1/32 of the spine node 101, obtains an outbound interface 1 from the route, and generates the route to the leaf node 102 based on the outbound interface 1 and the routing information of the leaf node 102 in the first route advertisement message. Specifically, the core node 301 may use the outbound interface 1 as the outbound interface of the forwarding information of the route to the leaf node 102, and set a next hop of the forwarding information to the next hop of the route corresponding to the routing prefix 1.1.1.1/32 of the spine node 101.

To enable the second network device to obtain the outbound interface from the route corresponding to the first routing prefix, in this embodiment of this application, the second network device needs to generate in advance the route corresponding to the first routing prefix. Specifically, the first network device may send a second route advertisement message to the second network device. The second route advertisement message includes the first routing prefix. Certainly, in addition to the first routing prefix, the second route advertisement message further includes other routing information used to generate the corresponding first routing prefix, for example, an AS identifier. After receiving the second route advertisement message, the first network device generates the route corresponding to the first routing prefix.

In addition to first routing prefix, the second route advertisement message may further include second indication information. The second indication information is used to indicate that the route corresponding to the first routing prefix is the second-type route, that is, to indicate the second network device to set a convergence priority of the route corresponding to the first routing prefix to be higher than a convergence priority of the route to the destination device. The convergence priorities indicate priorities of route convergence. When the route to the destination device and the route corresponding to the first routing prefix are unreachable, the route corresponding to the first routing prefix is converged first. Route convergence is described below in detail, and is not described herein.

For example, the spine node 101 may further send the second route advertisement message to the core node 301. The second route advertisement message carries routing information of the spine node 101 and the second indication information. The routing information of the spine node 101 includes the loopback address 1.1.1.1/32 of the spine node 101. After receiving the second route advertisement message from the spine node 101, the core node 301 generates a route to the spine node 101 based on the routing information of the spine node 101, and sets a convergence priority of the route to 1. After receiving the first route advertisement message from the spine node 101 and generating the route to the leaf node 102, the core node 301 sets a convergence priority of the route to 0. In other words, a route priority of the route to the spine node 101 is higher than the convergence priority of the route to the leaf node 102.

Certainly, the second route advertisement message may alternatively not carry other routing information corresponding to the first routing prefix. The other routing information is carried in another route advertisement message. The second route advertisement message carries only the first routing prefix and the second indication information.

In this embodiment of this application, the second route advertisement message may also be a BGP update message. The second indication information may be carried in a TLV of the second route advertisement message. Specifically, a value of T in the TLV may be hierarchical convergence, indicating that the TLV is a TLV used to indicate an attribute of the routing information in the second route advertisement message. A value of V in the TLV includes the second indication information. For example, the second indication information may be a base route (base route), indicating that the route corresponding to the first routing prefix is a route on which the hierarchical route depends.

In addition, a sequence in which the first network device sends the first route advertisement message and the second route advertisement message is not limited in this embodiment of this application. The first route advertisement message may be sent before the second route advertisement message. Alternatively, the second route advertisement message may be sent before the first route advertisement message.

The second network device may further send the first route advertisement message and the second route advertisement message to another network device, for example, a third network device, so that the third network device generates the route to the destination device and the route corresponding to the first routing prefix. For specific steps in which the third network device generates the route to the destination device and the route corresponding to the routing prefix, refer to the second network device. Details are not described herein.

After the second network device generates the route to the destination device and the route corresponding to the first routing prefix, a route withdrawal method performed by the second network device is described below with reference to two application scenarios.

Scenario 1: The second network device directly detects that a forwarding path corresponding to the first forwarding information is unavailable. In this scenario, the second network device may perform S105 and S106.

S105: The second network device determines that the forwarding path corresponding to the first forwarding information is unavailable; withdraws the route corresponding to the first routing prefix; and sets the first forwarding information of the route to the destination device to be unavailable, or deletes the first forwarding information.

That the route corresponding to the first routing prefix is unreachable (for example, a network device corresponding to the first routing prefix is faulty or the link to the network device is faulty) indicates that the route to a downstream device of the network device, that is, the forwarding path corresponding to the first forwarding information of the destination device is also unreachable. In this case, the second network device not only needs to withdraw the route corresponding to the first routing prefix, but also needs to set the first forwarding information of the route to the destination device to be unavailable, or delete the first forwarding information, so as to avoid a packet loss.

Specifically, after detecting that the forwarding path corresponding to the first forwarding information is unavailable, the second network device may perform route convergence on the route corresponding to the first routing prefix that has a higher convergence priority, that is, withdraw the route corresponding to the first routing prefix. Then, the second network device performs route convergence on the route to the destination device that has a lower convergence priority and that depends on the route corresponding to the first routing prefix. In other words, the second network device sets the first forwarding information of the route to be unavailable, or deletes the first forwarding information. In this case, a packet is not forwarded to the destination device based on the first forwarding information. This avoids the packet loss.

The setting the first forwarding information to be unavailable may be, for example, setting the next hop, the outbound interface, or a tunnel of the first forwarding information to be unavailable. The tunnel may be a VPN tunnel. The setting the next hop, the outbound interface, or a tunnel to be unavailable may be specifically setting an identifier of the next hop, an identifier of the outbound interface, or a tunnel identifier of the tunnel to be unavailable.

In this embodiment of this application, the setting an identifier of the next hop, an identifier of the outbound interface, or a tunnel identifier of the tunnel to be unavailable may be setting a value to null (null) or in another manner. This is not specifically limited herein.

S106: The second network device sends a route withdrawal message to the third network device, where the route withdrawal message includes the first routing prefix, so that the third network device withdraws, based on the first routing prefix, the route corresponding to the first routing prefix; and sets the forwarding information of the route to the destination device to be unavailable, or deletes the forwarding information.

In this embodiment of this application, the third network device may be a router, a switch, or another device. The third network device may be considered as an upstream device of the second network device. As mentioned above, the third network device also learns of the route to the destination device and the route corresponding to the first routing prefix. When the route corresponding to the first routing prefix is unreachable, the third network device also needs to withdraw the route corresponding to the first routing prefix; and set the forwarding information of the route to the destination device to be unavailable, or delete the forwarding information. In other words, by sending the route withdrawal message to the third network device only once, the second network device can withdraw the route corresponding to the first routing prefix; and set the forwarding information of the route to the destination device to be unavailable, or delete the forwarding information. This avoids forwarding the packet to the destination device based on the forwarding information. This embodiment of this application can improve route convergence efficiency, reduce a packet loss rate, and save network resources, compared with the conventional technology that needs to send a route withdrawal message used to withdraw the route corresponding to the first routing prefix and a route withdrawal message used to withdraw the route to the destination device.

For example, the core node 301 may send the route withdrawal message to the spine node 201. The route withdrawal message includes the loopback address 1.1.1.1/32 of the spine node 101. After receiving the route withdrawal message, based on the loopback address 1.1.1.1/32 of the spine node 101, the spine node 201 withdraws the route to the spine node 101; and sets the forwarding information of the route to the leaf node 102 to be unavailable, or withdraws the forwarding information. The other nodes follow the same rule. The spine node 201 may send, to the leaf node 202, the route withdrawal message including the loopback address 1.1.1.1/32 of the spine node 101. In this way, the leaf node 202 and the spine node 201 withdraw the route to the spine node 101; and set the forwarding information of the route to the leaf node 102 to be unavailable, or delete the forwarding information.

Scenario 2: Another network device (for example, a fourth network device) detects that a forwarding path corresponding to the first forwarding information is unavailable, and sends a route withdrawal message to the second network device. In this scenario, the second network device may perform S107 and S108.

S107: The second network device receives the route withdrawal message, where the route withdrawal message includes the first routing prefix.

S108: The second network device withdraws, based on the first routing prefix, the route corresponding to the first routing prefix; and sets the first forwarding information of the route to the destination device to be unavailable, or deletes the first forwarding information.

In scenario 2, the second network device may be, for example, the spine node 201 in FIG. 1, and the fourth network device may be, for example, the core node 301 in FIG. 1.

Specifically, after receiving the route withdrawal message including the first routing prefix, the second network device may perform route convergence on the route corresponding to the first routing prefix that has a higher convergence priority, that is, withdraw the route corresponding to the first routing prefix. Then, the second network device performs route convergence on the route to the destination device that has a lower convergence priority and that depends on the route corresponding to the first routing prefix. In other words, the second network device sets the first forwarding information of the route to be unavailable, or deletes the first forwarding information. In this case, a packet is not forwarded to the destination device based on the first forwarding information. This avoids the packet loss.

In scenario 2, by receiving the route withdrawal message only once, the second network device can withdraw the route corresponding to the first routing prefix; and set the first forwarding information of the route to the destination device to be unavailable, or delete the first forwarding information. This avoids forwarding the packet to the destination device based on the first forwarding information. This embodiment of this application can improve route convergence efficiency, reduce a packet loss rate, and save network resources, compared with the conventional technology that needs to send a route withdrawal message used to withdraw the route corresponding to the first routing prefix and a route withdrawal message used to withdraw the route to the destination device.

In addition, the second network device may further send the route withdrawal message to the upstream device (for example, the third network device). The route withdrawal message includes the first routing prefix, so that the third network device withdraws, based on the first routing prefix, the route corresponding to the first routing prefix; and sets the first forwarding information of the route to the destination device to be unavailable, or deletes the first forwarding information.

In addition, the method provided in this embodiment of this application may be applied to a load-balancing scenario or an active/standby scenario. In the load-balancing scenario, there may be a plurality of paths from the second network device to the destination device, and the plurality of paths are used for load balancing. In an active/standby scenario, one path from the second network device to the destination device is an active path, and other one or more paths are standby paths. If the active path is faulty, the standby paths can be enabled to forward a packet to the destination device. Two paths are used as an example below to describe the two scenarios.

In the foregoing description, the second network device receives the first route advertisement message, where the first route advertisement message includes the routing information of the destination device, the first routing prefix, and the first indication information. In the load-balancing scenario or the active/standby scenario, the second network device may further receive a third route advertisement message. The third route advertisement message includes the routing information of the destination device, a second routing prefix, and third indication information. In this embodiment of this application, the third route advertisement message may be a BGP update message, and the second routing prefix and the third indication information may be carried in a TLV of the BGP update message.

The second network device generates the route to the destination device based on the routing information of the destination device, iterates, to a route corresponding to the second routing prefix, the route to the destination device based on an indication of the third indication information, and generates second forwarding information of the route to the destination device. Specifically, the second network device may match for the corresponding route based on the second routing prefix, and use an outbound interface of the route corresponding to the second routing prefix as an outbound interface of the second forwarding information of the route to the destination device. In other words, the route to the destination device includes two pieces of forwarding information: the first forwarding information and the second forwarding information. The two pieces of forwarding information indicate that there are two forwarding paths from the second network device to the destination device. In this embodiment of this application, the first routing prefix and the second routing prefix may be the same or different. If the routing prefixes are the same, it indicates that the two paths to the destination device pass through a same network device, that is, the network device corresponding to the first routing prefix or the second routing prefix. In this case, the outbound interface of the first forwarding information is different from the outbound interface of the second forwarding information. In other words, there are two forwarding paths from the second network device to the network device corresponding to the first routing prefix or the second routing prefix, and the two forwarding paths may be paths used for load balancing, or may alternatively be active and standby paths. Optionally, the second forwarding information may further include a next hop. The second network device may use, based on the indication of the third indication information, the next hop of the route corresponding to the first routing prefix as the next hop of the second forwarding information.

In addition, the second network device may further receive a fourth route advertisement message. The fourth route advertisement message includes the second routing prefix and fourth indication information. The second network device may generate the corresponding route based on the second routing prefix, and set, based on an indication of the fourth indication information, a convergence priority of the route corresponding to the second routing prefix to be higher than the convergence priority of the route to the destination device.

For example, it is assumed that there are two links between the spine node 101 and the core node 301, and the two links implement load balancing between the spine node 101 and the core node 301. In this case, the spine node 101 may send a route advertisement message 1 to the core node 301 through the two links. The route advertisement message 1 includes the loopback address of the spine node 101. The core node 301 generates, based on the route advertisement message 1 received through an interface 1 or an interface 2, a route corresponding to the loopback address of the spine node 101. The route includes two pieces of forwarding information: forwarding information 1 and forwarding information 2. An outbound interface of the forwarding information 1 is the interface 1, and an outbound interface of the forwarding information 2 is the interface 2. The forwarding information 1 further includes a next hop 1, and the next hop 1 is a next hop corresponding to the interface 1. The forwarding information 2 further includes a next hop 2, and the next hop 2 is a next hop corresponding to the interface 2.

Similarly, the spine node 101 sends a route advertisement message 2 to the core node 301 through the two links. The route advertisement message 2 includes the routing information of the leaf node 102, the loopback address of the spine node 101, and indication information (the first indication information or the third indication information). The core node 301 receives the corresponding route advertisement message 2 through the interface 1 and the interface 2, and generates a route to the spine node 101 based on the route advertisement message 2. The route includes forwarding information 3 and forwarding information 4. An outbound interface of the forwarding information 3 is the interface 1, and an outbound interface of the forwarding information 4 is the interface 2. The forwarding information 3 further includes a next hop 3, and the next hop 3 is the next hop 1 corresponding to the interface 1. The forwarding information 4 further includes a next hop 4, and the next hop 4 is the next hop 2 corresponding to the interface 2.

In the load-balancing scenario or the active/standby scenario, if the second network device receives a route withdrawal message through a specific link, the second network device sets forwarding information of a route to a destination device corresponding to the specific link to be unavailable, or deletes the forwarding information; and the packet can be sent normally through other links. When all forwarding information of the route to the destination device is set to be unavailable or is deleted, the route to the destination device can be withdrawn.

For example, the spine node 201 is connected to the core node 301 through an interface 3 and an interface 4. The spine node 201 stores the route corresponding to the loopback address 1.1.1.1/32 of the spine node 101, and outbound interfaces of the route include the interface 3 and the interface 4. When the spine node 201 receives, from the core node 301 through the interface 3, a route withdrawal message that includes the loopback address 1.1.1.1/32 of the spine node 101, the spine node 201 may delete the interface 3 in the route of the spine node 101, and then set, to be invalid, forwarding information of the route to the leaf node 102 whose outbound interface is the interface 3. In other words, the spine node 201 cannot forward a packet to the leaf node 102 through the interface 3, but may forward the packet to the leaf node 102 through the interface 4. Further, when the spine node 201 receives, from the core node 301 through the interface 4, the route withdrawal message that includes the loopback address 1.1.1.1/32 of the spine node 101, the spine node 201 may withdraw the route of the spine node 101, and then set, to be invalid, the forwarding information of the route to the leaf node 102 whose outbound interface is the interface 4. In other words, the spine node 201 also cannot forward the packet to the leaf node 102 through the interface 4.

In conclusion, in this embodiment of this application, a route advertisement message used to learn the route to the destination device carries the first routing prefix and the first indication information, so that the second network device can iterate, to the route corresponding to the first routing prefix, the route to the destination device based on the indication of the first indication information, and a dependency relationship between the route to the destination device and the route corresponding to the first routing prefix is established in a route advertisement phase. In this way, after receiving a route withdrawal message that includes the first routing prefix, the second network device may not only withdraw the corresponding route based on the first routing prefix; but also set the forwarding information of the dependent route to the destination device to be unavailable, or withdraw the forwarding information. This achieves faster route convergence compared with the conventional technology. In addition, the first network device may not need to send, to the second network device, a route withdrawal message used to withdraw the route to the destination device. This saves network resources compared with the conventional technology.

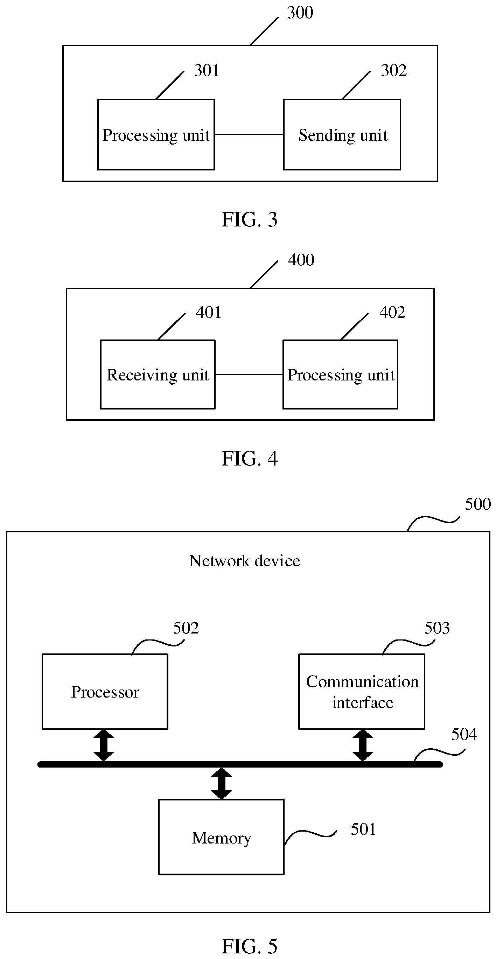

Correspondingly, referring to FIG. 3, an embodiment of this application provides a first network device 300. The device may implement a function of the first network device shown in FIG. 2.

The first network device 300 includes a processing unit 301 and a sending unit 302. The processing unit 301 is configured to perform S101 and S102 in the embodiment shown in FIG. 2. The sending unit 302 is configured to perform S103 in the embodiment shown in FIG. 2. Details are as follows.

The processing unit 301 is configured to obtain routing information of a destination device.

The processing unit 301 is further configured to generate a first route advertisement message. The first route advertisement message includes the routing information of the destination device, a routing prefix, and first indication information.

The sending unit 302 is configured to send the first route advertisement message to a second network device. The first route advertisement message is used to indicate the second network device to generate a route to the destination device based on the routing information of the destination device. The first indication information is used to indicate the second network device to iterate, to a route corresponding to the routing prefix, the route to the destination device.

The packet processing apparatus can implement the function of the first network device in the foregoing method embodiments. For specific execution steps, refer to the foregoing method embodiments. Details are not described herein.

Correspondingly, referring to FIG. 4, an embodiment of this application provides a second network device 400. The network device may implement a function of the second network device shown in the embodiment in FIG. 2.

The second network device 400 includes a receiving unit 401 and a processing unit 402. The receiving unit 401 and the processing unit 402 are configured to perform S104 in the embodiment shown in FIG. 2. Details are as follows.

The receiving unit 401 is configured to receive a first route advertisement message from a first network device. The first route advertisement message includes routing information of a destination network device, a first routing prefix, and first indication information.

The processing unit 402 is configured to: generate a route to the destination network device based on the routing information of the destination network device, and iterate, to a route corresponding to the first routing prefix, the route to the destination network device based on an indication of the first indication information.

The packet processing apparatus can implement the function of the second network device in the foregoing method embodiments. For specific execution steps, refer to the foregoing method embodiments. Details are not described herein.

Referring to FIG. 5, an embodiment of this application provides a network device 500. The network device 500 includes at least one processor 502 and at least one communication interface 503. Further, the network device may further include at least one memory 501. The memory 501 is configured to store a computer program or instructions. The memory 501 may be a memory inside the processor, or may be a memory outside the processor. A function of the first network device 300 may be implemented on the network device 500. When the embodiment shown in FIG. 3 is implemented and the units described in the embodiment of FIG. 3 are implemented by using software, software or program code required for performing functions of the processing unit 301 and the sending unit 302 in FIG. 3 is stored in the memory 501. A function of the second network device 400 may be implemented on the network device 500. When the embodiment shown in FIG. 4 is implemented and the units described in the embodiment of FIG. 4 are implemented by using software, software or program code required for performing functions of the receiving unit 401 and the processing unit 402 in FIG. 4 is stored in the memory 501. The processor 502 is configured to execute the instructions in the memory 501, so that the network device 500 performs any step of the route advertisement and processing methods applied to the embodiment shown in FIG. 2. The communication interface 503 is configured to communicate with another network device.

The memory 501, the processor 502, and the communication interface 503 are connected to each other through the bus 504. The bus 504 may be a peripheral component interconnect (peripheral component interconnect, PCI for short) bus, an extended industry standard architecture (extended industry standard architecture, EISA for short) bus, or the like. Buses may be classified into an address bus, a data bus, a control bus, and the like. For ease of representation, only one thick line is used to represent the bus in FIG. 5, but this does not mean that there is only one bus or only one type of bus.

The communication interface 503 is configured to interact with another network device. For a specific process, refer to the detailed description of the foregoing embodiments. Details are not described herein.

The memory 501 may be a random access memory (random access memory, RAM), a flash (flash) memory, a read-only memory (read-only memory, ROM), an erasable programmable read-only memory (erasable programmable read-only memory, EPROM), an electrically erasable programmable read-only memory (electrically erasable programmable read-only memory, EEPROM), a register (register), a hard disk, a removable hard disk, a CD-ROM, or any other form of storage medium known to a person skilled in the art.

The processor 502 may be, for example, a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor.

The communication interface 503 may be, for example, an interface card, or may be an Ethernet (Ethernet) interface or an asynchronous transfer mode (asynchronous transfer mode, ATM) interface.

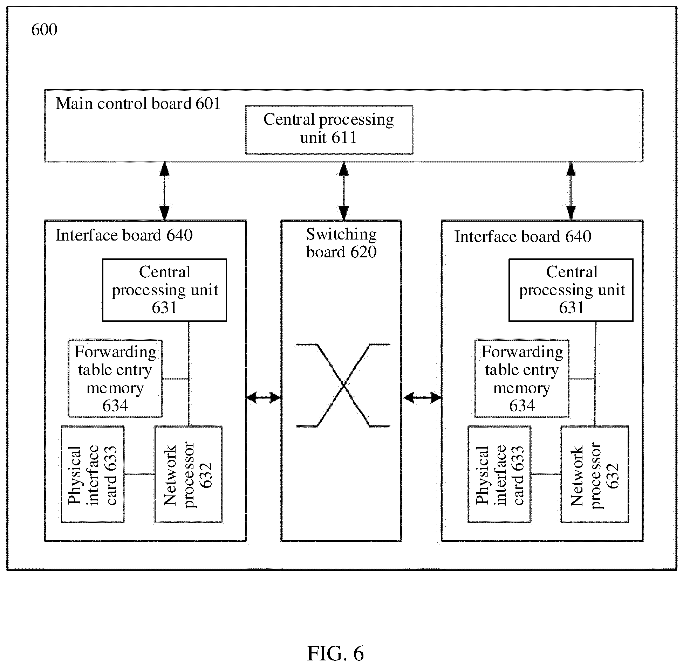

FIG. 6 is a schematic diagram of a structure of a network device 600 according to an embodiment of this application. The network devices shown in the embodiment of FIG. 2 and the other embodiments may be implemented by using the device shown in FIG. 6. Refer to the schematic diagram of the structure of the device shown in FIG. 6. The device 600 includes a main control board and one or more interface boards. The main control board is communicatively connected to the interface boards. The main control board is also referred to as a main processing unit (main processing unit, MPU) or a route processor card (route processor card). The main control board is responsible for controlling and managing each component in the device 600, including route computation, device management, and function maintenance. The interface board is also referred to as a line processing unit (line processing unit, LPU) or a line card (line card), and is configured to forward data. In some embodiments, the device 600 may also include a switching board. The switching board is communicatively connected to the main control board and the interface boards. The switching board is configured to forward data between the interface boards. The switching board may also be referred to as a switch fabric unit (switch fabric unit, SFU). The interface board includes a central processing unit, a memory, a forwarding chip, and a physical interface card (physical interface card, PIC). The central processing unit is communicatively connected to the memory, a network processor, and the physical interface card. The memory is configured to store a forwarding table. The forwarding chip is configured to forward a received data packet based on the forwarding table stored in the memory. If a destination address of the data packet is an address of the device 600, the data packet is sent to the central processing unit (central processing unit, CPU), for example, a central processing unit 631, for processing. If the destination address of the data packet is not the address of the device 600, a next hop and an outbound interface that correspond to the destination address are found in the forwarding table based on the destination address, and the data packet is forwarded to the outbound interface corresponding to the destination address. The forwarding chip may be a network processor (network processor, NP). The PIC, also referred to as a subcard, can be installed on the interface board. The PIC is responsible for converting an optical or electrical signal into a data packet, checks validity of the data packet, and forwards the data packet to the forwarding chip for processing. In some embodiments, the central processing unit may also perform a function of the forwarding chip, for example, implement software forwarding based on a general-purpose CPU, so that the interface board does not need the forwarding chip. A communication connection between the main control board, the interface boards, and the switching board may be implemented through a bus. In some embodiments, the forwarding chip may be implemented as an application-specific integrated circuit (application-specific integrated circuit, ASIC) or a field programmable gate array (field programmable gate array, FPGA).

Logically, the device 600 includes a control plane and a forwarding plane. The control plane includes the main control board and the central processing unit. The forwarding plane includes components for performing forwarding, such as the memory, the PIC, and the NP. The control plane performs functions such as a function of a router, generating a forwarding table, processing signaling and protocol packets, and configuring and maintaining a status of a device. The control plane delivers the generated forwarding table to the forwarding plane. On the forwarding plane, the NP searches a table based on the forwarding table delivered by the control plane, to forward a packet received by the PIC of the device 600. The forwarding table delivered by the control plane may be stored in the memory. In some embodiments, the control plane and the forwarding plane may be completely separated, and are not on a same device. The foregoing process is briefly described below with reference to the embodiment shown in FIG. 2 and other embodiments.

As shown in the method in FIG. 2, the CPU 631 of the network device 600 may obtain routing information of a destination device, for example, receive the routing information of the destination device sent by the physical interface card 633, generate a first route advertisement message, and send the first route advertisement message to a second network device. The first route advertisement message includes the routing information of the destination device, a routing prefix, and first indication information. Alternatively, the network device 600 may receive the first route advertisement message by using the physical interface card 633 and send the first route advertisement message to the CPU 631, so that the CPU 631 generates a route to the destination device based on the routing information of the destination device, and iterates, to a route corresponding to the first routing prefix, the route to the destination device based on an indication of the first indication information.

The network device provided in this embodiment of this application may correspond to the first network device or the second network device in the foregoing method embodiment in FIG. 2, and may implement functions of the network devices in the foregoing method embodiments and/or various steps and methods implemented by the network devices. The foregoing is merely a brief example description. For brevity, details are not described herein.

It should be noted that there may be one or more main control boards. When there are a plurality of main control boards, the main control boards may include an active main control board and a standby main control board. There may be one or more interface boards. A network device having a stronger data processing capability provides more interface boards. There may also be one or more physical interface cards on the interface board. There may be no switching board, or one or more switching boards. When there are a plurality of switching boards, load balancing and redundancy backup may be implemented by the switching boards together. In a centralized forwarding architecture, the network device may not need the switching board, and the interface board provides a function of processing service data of an entire system. In a distributed forwarding architecture, the network device may have at least one switching board, and data exchange between a plurality of interface boards is implemented by using the switching board, to provide a large-capacity data exchange and processing capability. Therefore, a data access and processing capability of a network device in the distributed architecture is better than that of a device in the centralized architecture. Optionally, the network device may alternatively be in a form in which there is only one card. To be specific, there is no switching board, and functions of the interface board and the main control board are integrated on the card. In this case, the central processing unit on the interface board and the central processing unit on the main control board may be combined into one central processing unit on the card, to perform functions obtained after the two central processing units are combined. The device in this form (for example, a network device such as a low-end switch or router) has a weak data exchange and processing capability. A specific architecture that is to be used depends on a specific networking deployment scenario. This is not limited herein.

In addition, an embodiment of this application provides a computer-readable storage medium including a computer program. When the computer program runs on a computer, the computer is enabled to perform the route advertisement method or the route generation method applied to the network device 600.

An embodiment of this application further provides a chip system, including a processor. The processor is coupled to a memory, the memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using hardware. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may be one or more memories in the chip system. The memory may be integrated with the processor, or may be disposed separately from the processor. This is not limited in this application. For example, the memory may be a non-transitory processor, for example, a read-only memory (ROM). The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that steps in the foregoing method embodiments may be implemented by using an integrated logical circuit of hardware in the processor or instructions in a form of software. The steps of the methods disclosed with reference to the embodiments of this application may be directly performed by a hardware processor, or may be performed by using a combination of hardware in the processor and a software module.

An embodiment of this application provides a network system including the first network device 300 shown in FIG. 3 and the second network device 400 shown in FIG. 4.

In this specification, the claims, and the accompanying drawings of this application, terms "first", "second", "third", "fourth", and the like (if existent) are intended to distinguish between similar objects but do not necessarily indicate a specific order or sequence. It should be understood that data used in such a way are interchangeable in an appropriate case, so that the embodiments described herein can be implemented in an order other than the order illustrated or described herein. Moreover, terms "include", "comprise", and any other variants thereof mean to cover non-exclusive inclusion. For example, a process, method, system, product, or device that includes a list of steps or units is not necessarily limited to those steps or units, but may include other steps or units not expressly listed or inherent to such a process, method, product, or device.

In this application, "at least one item (piece)" means one or more, and "a plurality of" means two or more. "At least one of the following items (pieces)" or a similar expression thereof means any combination of the items, including a single item (piece) or any combination of a plurality of items (pieces). For example, at least one item (piece) of a, b, or c may represent: a, b, c, a and b, a and c, b and c, or a, b, and c, where a, b, and c may be singular or plural. In this application, it is considered that "A and/or B" includes only A, only B, and A and B.

It can be clearly understood by a person skilled in the art that, for a purpose of convenient and brief description, for detailed working processes of the foregoing system, apparatus, and unit, refer to corresponding processes in the foregoing method embodiments. Details are not described herein.

In the embodiments provided in this application, it should be understood that the disclosed system, apparatus, and method may be implemented in other manners. For example, the described apparatus embodiments are merely examples. For example, division into the units is merely logical function division, or may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and components displayed as units may or may not be physical units, may be located in one position, or may be distributed on a plurality of network units. Some or all of the units may be obtained depending on actual requirements to achieve the objectives of the solutions in the embodiments.

In addition, module units in the embodiments of this application may be integrated into one processing unit, each of the units may exist alone physically, or at least two units are integrated into one unit. The integrated unit may be implemented in a form of hardware, or may be implemented in a form of a software module unit.

When the integrated unit is implemented in a form of a software module unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for enabling a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium. The communication medium includes any medium that facilitates transmission of a computer program from one place to another. The storage medium may be any available medium accessible to a general-purpose computer or a dedicated computer.

The objectives, technical solutions, and beneficial effects of this application are further described in detail in the foregoing specific implementations. It should be understood that the foregoing descriptions are merely specific implementations of this application.

## Claims

1. A route advertisement method, wherein the method comprises:
obtaining (S 101), by a first network device, routing information of a destination device;
generating (S102), by the first network device, a first route advertisement message, wherein the first route advertisement message comprises the routing information of the destination device, a routing prefix, and first indication information; and
sending (S103), by the first network device, the first route advertisement message to a second network device, wherein the first route advertisement message is used to indicate the second network device to generate a route to the destination device based on the routing information of the destination device, and the first indication information is used to indicate the second network device to iterate, to a route corresponding to the routing prefix, the route to the destination device;
wherein that the first indication information is used to indicate the second network device to iterate, to a route corresponding to the routing prefix, the route to the destination device comprises:
the first indication information is used to indicate the second network device to use an outbound interface of the route corresponding to the routing prefix as an outbound interface of forwarding information of the route to the destination device.

2. The method according to claim 1, wherein the method further comprises:
sending, by the first network device, a second route advertisement message to the second network device, wherein the second route advertisement message comprises the routing prefix and second indication information, the second route advertisement message is used to indicate the second network device to generate the route corresponding to the routing prefix, and the second indication information is used to indicate that a convergence priority of the route corresponding to the routing prefix is higher than a convergence priority of a route corresponding to the destination device.

3. The method according to claim 1 or 2, wherein both the route to the destination device and the route corresponding to the routing prefix are border gateway protocol, BGP, routes.

4. The method according to any one of claims 1 to 3, wherein the first indication information is further used to indicate to use a next hop of the route corresponding to the routing prefix as a next hop of the forwarding information of the route to the destination device.

5. The method according to any one of claims 1 to 4, wherein the routing prefix comprises a loopback address of the first network device, a physical interface address of the first network device, or a routing prefix corresponding to a route received by the first network device.

6. The method according to any one of claims 1 to 5, wherein the routing prefix and the first indication information are carried in a type-length-value, TLV, of the first route advertisement message.

7. A route generation method, wherein the method comprises:
receiving (S104), by a second network device, a first route advertisement message from a first network device, wherein the first route advertisement message comprises routing information of a destination device, a first routing prefix, and first indication information; and
generating (S104), by the second network device, a route to the destination device based on the routing information of the destination device, and iterating, to a route corresponding to the first routing prefix, the route to the destination device based on an indication of the first indication information;
wherein the iterating, by the second network device, to a route corresponding to the first routing prefix, the route to the destination device based on an indication of the first indication information comprises:
using, by the second network device based on the indication of the first indication information, an outbound interface of the route corresponding to the first routing prefix as an outbound interface of the route to the destination device.

8. The method according to claim 7, wherein the method further comprises:
receiving, by the second network device, a second route advertisement message, wherein the second route advertisement message comprises the first routing prefix and second indication information; and
generating, by the second network device, the route corresponding to the first routing prefix, and setting, based on an indication of the second indication information, a convergence priority of the route corresponding to the first routing prefix to be higher than a convergence priority of the route to the destination device.

9. The method according to claims 7 or 8, wherein the method further comprises:
using, by the second network device based on the indication of the first indication information, a next hop of the route corresponding to the first routing prefix as a next hop of the first forwarding information.

10. The method according to any one of claims 7 to 9, wherein the iterating, by the second network device, to a route corresponding to the routing prefix, the route to the destination device based on an indication of the first indication information further comprises:
obtaining, by the second network device through an exact match based on the routing prefix, the route corresponding to the routing prefix; or
obtaining, by the second network device through a longest match based on the routing prefix, the route corresponding to the routing prefix.

11. The method according to any one of claims 7 to 10, wherein the method further comprises:
receiving, by the second network device, a third route advertisement message, wherein the third route advertisement message comprises the routing information of the destination device, a second routing prefix, and third indication information; and
generating, by the second network device, the route to the destination device based on the routing information of the destination device, and iterating, to a route corresponding to the second routing prefix, the route to the destination device based on an indication of the third indication information.

12. A first network device, wherein the network device is configured to implement the method according to any one of claims 1 to 6.

13. A second network device, wherein the network device is configured to implement the method according to any one of claims 7 to 11.

## Patentansprüche

1. Routenanzeigeverfahren, wobei das Verfahren umfasst:
Erhalten (S101), durch eine erste Netzwerkvorrichtung, von Routinginformationen einer Zielvorrichtung;
Erzeugen (S102), durch die erste Netzwerkvorrichtung, einer ersten Routenanzeigenachricht, wobei die erste Routenanzeigenachricht die Routinginformationen der Zielvorrichtung, ein Routingpräfix und erste Anzeigeinformationen umfasst; und
Senden (S103), durch die erste Netzwerkvorrichtung, der ersten Routenanzeigenachricht an eine zweite Netzwerkvorrichtung, wobei die erste Routenanzeigenachricht verwendet wird, um der zweiten Netzwerkvorrichtung anzuzeigen, eine Route zur Zielvorrichtung basierend auf den Routinginformationen der Zielvorrichtung zu erzeugen, und die ersten Anzeigeinformationen verwendet werden, um der zweiten Netzwerkvorrichtung anzuzeigen, die Route zur Zielvorrichtung zu einer Route, die dem Routingpräfix entspricht, zu wiederholen;
wobei die Verwendung der ersten Anzeigeinformationen, um der zweiten Netzwerkvorrichtung anzuzeigen, die Route zur Zielvorrichtung zu einer Route, die dem Routingpräfix entspricht, zu wiederholen, umfasst:
die ersten Anzeigeinformationen werden verwendet, um der zweiten Netzwerkvorrichtung anzuzeigen, eine ausgehende Schnittstelle der Route, die dem Routingpräfix entspricht, als ausgehende Schnittstelle für Weiterleitungsinformationen der Route zur Zielvorrichtung zu verwenden.

2. Verfahren gemäß Anspruch 1, wobei das Verfahren ferner umfasst:
Senden, durch die erste Netzwerkvorrichtung, einer zweiten Routenanzeigenachricht an die zweite Netzwerkvorrichtung, wobei die zweite Routenanzeigenachricht das Routingpräfix und zweite Anzeigeinformationen umfasst, die zweite Routenanzeigenachricht verwendet wird, um der zweiten Netzwerkvorrichtung anzuzeigen, die Route zu erzeugen, die dem Routingpräfix entspricht, und die zweiten Anzeigeinformationen verwendet werden, um anzuzeigen, dass eine Konvergenzpriorität der Route, die dem Routingpräfix entspricht, höher ist als eine Konvergenzpriorität einer Route, die der Zielvorrichtung entspricht.

3. Verfahren gemäß Anspruch 1 oder 2, wobei sowohl die Route zur Zielvorrichtung als auch die Route, die dem Routingpräfix entspricht, BGP ("Border Gateway Protocol") -Routen sind.

4. Verfahren gemäß einem der Ansprüche 1 bis 3, wobei die ersten Anzeigeinformationen ferner verwendet werden, um anzuzeigen, dass ein nächster Streckenabschnitt der Route, die dem Routingpräfix entspricht, als nächster Streckenabschnitt der Weiterleitungsinformationen der Route zur Zielvorrichtung verwendet werden soll.

5. Verfahren gemäß einem der Ansprüche 1 bis 4, wobei das Routingpräfix eine Rückkopplungs ("Loopback") -Adresse der ersten Netzwerkvorrichtung, eine physische Schnittstellenadresse der ersten Netzwerkvorrichtung oder ein Routingpräfix umfasst, das einer von der ersten Netzwerkvorrichtung empfangenen Route entspricht.

6. Verfahren gemäß einem der Ansprüche 1 bis 5, wobei das Routingpräfix und die ersten Anzeigeinformationen in einem Typ-Längen-Wert (TLV, "Type-Length-Value") der ersten Routenanzeigenachricht enthalten sind.

7. Routenerzeugungsverfahren, wobei das Verfahren umfasst:
Empfangen (S104), durch eine zweite Netzwerkvorrichtung, einer ersten Routenanzeigenachricht von einer ersten Netzwerkvorrichtung, wobei die erste Routenanzeigenachricht Routinginformationen einer Zielvorrichtung, ein erstes Routingpräfix und erste Anzeigeinformationen umfasst; und
Erzeugen (S104), durch die zweite Netzwerkvorrichtung, einer Route zur Zielvorrichtung basierend auf den Routinginformationen der Zielvorrichtung und Wiederholen der Route zur Zielvorrichtung zu einer Route, die dem ersten Routingpräfix entspricht, basierend auf einer Angabe der ersten Anzeigeinformationen;
wobei das Wiederholen, durch die zweite Netzwerkvorrichtung, der Route zur Zielvorrichtung zu einer Route, die dem ersten Routingpräfix entspricht, basierend auf einer Angabe der ersten Anzeigeinformationen umfasst:
Verwenden, durch die zweite Netzwerkvorrichtung basierend auf der Angabe der ersten Anzeigeinformationen, einer ausgehenden Schnittstelle der Route, die dem ersten Routingpräfix entspricht, als ausgehende Schnittstelle der Route zur Zielvorrichtung.

8. Verfahren gemäß Anspruch 7, wobei das Verfahren ferner umfasst:
Empfangen, durch die zweite Netzwerkvorrichtung, einer zweiten Routenanzeigenachricht, wobei die zweite Routenanzeigenachricht das erste Routingpräfix und zweite Anzeigeinformationen umfasst; und
Erzeugen, durch die zweite Netzwerkvorrichtung, der Route, die dem ersten Routingpräfix entspricht, und Einstellen, basierend auf einer Angabe der zweiten Anzeigeinformationen, einer Konvergenzpriorität der Route, die dem ersten Routingpräfix entspricht, die höher ist als eine Konvergenzpriorität der Route zur Zielvorrichtung.

9. Verfahren gemäß Anspruch 7 oder 8, wobei das Verfahren ferner umfasst:
Verwenden, durch die zweite Netzwerkvorrichtung basierend auf der Angabe der ersten Anzeigeinformationen, eines nächsten Streckenabschnitts der Route, die dem ersten Routingpräfix entspricht, als nächsten Streckenabschnitt der ersten Weiterleitungsinformationen.

10. Verfahren gemäß einem der Ansprüche 7 bis 9, wobei das Wiederholen, durch die zweite Netzwerkvorrichtung, der Route zur Zielvorrichtung zu einer Route, die dem Routingpräfix entspricht, basierend auf einer Angabe der ersten Anzeigeinformationen ferner umfasst:
Erhalten, durch die zweite Netzwerkvorrichtung durch eine exakte Übereinstimmung basierend auf dem Routingpräfix, der Route, die dem Routingpräfix entspricht; oder
Erhalten, durch die zweite Netzwerkvorrichtung durch eine längste Übereinstimmung basierend auf dem Routingpräfix, der Route, die dem Routingpräfix entspricht.

11. Verfahren gemäß einem der Ansprüche 7 bis 10, wobei das Verfahren ferner umfasst:
Empfangen, durch die zweite Netzwerkvorrichtung, einer dritten Routenanzeigenachricht, wobei die dritte Routenanzeigenachricht die Routinginformationen der Zielvorrichtung, ein zweites Routingpräfix und dritte Anzeigeinformationen umfasst; und
Erzeugen, durch die zweite Netzwerkvorrichtung, der Route zur Zielvorrichtung basierend auf den Routinginformationen der Zielvorrichtung und Wiederholen der Route zur Zielvorrichtung zu einer Route, die dem zweiten Routingpräfix entspricht, basierend auf einer Angabe der dritten Anzeigeinformationen.

12. Erste Netzwerkvorrichtung, wobei die Netzwerkvorrichtung dafür ausgelegt ist, das Verfahren gemäß einem der Ansprüche 1 bis 6 durchzuführen.

13. Zweite Netzwerkvorrichtung, wobei die Netzwerkvorrichtung dafür ausgelegt ist, das Verfahren gemäß einem der Ansprüche 7 bis 11 durchzuführen.

## Revendications

1. Procédé d'annonce de route, le procédé comprenant :
l'obtention (S101), par un premier dispositif de réseau, d'informations de routage d'un dispositif de destination ;
la génération (S102), par le premier dispositif de réseau, d'un premier message d'annonce de route, le premier message d'annonce de route comprenant les informations de routage du dispositif de destination, un préfixe de routage, et des premières informations d'indication ; et
l'envoi (S103), par le premier dispositif de réseau, du premier message d'annonce de route à un deuxième dispositif de réseau, le premier message d'annonce de route étant utilisé pour indiquer au deuxième dispositif de réseau de générer une route vers le dispositif de destination sur la base des informations de routage du dispositif de destination, et les premières informations d'indication étant utilisées pour indiquer au deuxième dispositif de réseau d'itérer, vers une route correspondant au préfixe de routage, la route vers le dispositif de destination ;
dans lequel le fait que les premières informations d'indication sont utilisées pour indiquer au deuxième dispositif de réseau d'itérer, vers une route correspondant au préfixe de routage, la route vers le dispositif de destination, comprend :
les premières informations d'indication sont utilisées pour indiquer au deuxième dispositif de réseau d'utiliser une interface sortante de la route correspondant au préfixe de routage en tant qu'interface sortante d'informations de transfert de la route vers le dispositif de destination.

2. Procédé selon la revendication 1, le procédé comprenant en outre :
l'envoi, par le premier dispositif de réseau, d'un deuxième message d'annonce de route au deuxième dispositif de réseau, le deuxième message d'annonce de route comprenant le préfixe de routage et des deuxièmes informations d'indication, le deuxième message d'annonce de route étant utilisé pour indiquer au deuxième dispositif de réseau de générer la route correspondant au préfixe de routage, et les deuxièmes informations d'indication étant utilisées pour indiquer qu'une priorité de convergence de la route correspondant au préfixe de routage est plus haute qu'une priorité de convergence d'une route correspondant au dispositif de destination.

3. Procédé selon la revendication 1 ou la revendication 2, dans lequel à la fois la route vers le dispositif de destination et la route correspondant au préfixe de routage sont des routes de protocole de passerelle frontière, BGP.

4. Procédé selon l'une quelconque des revendications 1 à 3, dans lequel les premières informations d'indication sont en outre utilisées pour indiquer d'utiliser un saut suivant de la route correspondant au préfixe de routage en tant que saut suivant des informations de transfert de la route vers le dispositif de destination.

5. Procédé selon l'une quelconque des revendications 1 à 4, dans lequel le préfixe de routage comprend une adresse de rebouclage du premier dispositif de réseau, une adresse d'interface physique du premier dispositif de réseau, ou un préfixe de routage correspondant à une route reçu par le premier dispositif de réseau.

6. Procédé selon l'une quelconque des revendications 1 à 5, dans lequel le préfixe de routage et les premières informations d'indication sont transportés dans une valeur de longueur de type, TLV, du premier message d'annonce de route.

7. Procédé de génération de route, le procédé comprenant :
la réception (S104), par un deuxième dispositif de réseau, d'un premier message d'annonce de route en provenance d'un premier dispositif de réseau, le premier message d'annonce de route comprenant des informations de routage d'un dispositif de destination, un premier préfixe de routage, et des premières informations d'indication ; et
la génération (S104), par le deuxième dispositif de réseau, d'une route vers le dispositif de destination sur la base des informations de routage du dispositif de destination, et l'itération, vers une route correspondant au premier préfixe de routage, de la route vers le dispositif de destination sur la base d'une indication des premières informations d'indication ;
dans lequel l'itération, par le deuxième dispositif de réseau, vers une route correspondant au premier préfixe de routage, de la route vers le dispositif de destination sur la base d'une indication des premières informations d'indication, comprend :
l'utilisation, par le deuxième dispositif de réseau sur la base de l'indication des premières informations d'indication, d'une interface sortante de la route correspondant au premier préfixe de routage en tant qu'interface sortante de la route vers le dispositif de destination.

8. Procédé selon la revendication 7, le procédé comprenant en outre :
la réception, par le deuxième dispositif de réseau, d'un deuxième message d'annonce de route, le deuxième message d'annonce de route comprenant le premier préfixe de routage et des deuxièmes informations d'indication ; et
la génération, par le deuxième dispositif de réseau, de la route correspondant au premier préfixe de routage, et le réglage, sur la base d'une indication des deuxièmes informations d'indication, d'une priorité de convergence de la route correspondant au premier préfixe de routage pour qu'elle soit plus haute qu'une priorité de convergence de la route vers le dispositif de destination.

9. Procédé selon les revendications 7 ou 8, le procédé comprenant en outre :
l'utilisation, par le deuxième dispositif de réseau sur la base de l'indication des premières informations d'indication, d'un saut suivant de la route correspondant au premier préfixe de routage en tant que saut suivant des premières informations de transfert.

10. Procédé selon l'une quelconque des revendications 7 à 9, dans lequel l'itération, par le deuxième dispositif de réseau, vers une route correspondant au préfixe de routage, de la route vers le dispositif de destination sur la base d'une indication des premières informations d'indication, comprend en outre :
l'obtention, par le deuxième dispositif de réseau par le biais d'un appariement exact sur la base du préfixe de routage, de la route correspondant au préfixe de routage ; ou
l'obtention, par le deuxième dispositif de réseau par le biais d'un appariement le plus long sur la base du préfixe de routage, de la route correspondant au préfixe de routage.

11. Procédé selon l'une quelconque des revendications 7 à 10, le procédé comprenant en outre :
la réception, par le deuxième dispositif de réseau, d'un troisième message d'annonce de route, le troisième message d'annonce de route comprenant les informations de routage du dispositif de destination, un deuxième préfixe de routage, et des troisièmes informations d'indication ; et
la génération, par le deuxième dispositif de réseau, de la route vers le dispositif de destination sur la base des informations de routage du dispositif de destination, et l'itération, vers une route correspondant au deuxième préfixe de routage, de la route vers le dispositif de destination sur la base d'une indication des troisièmes informations d'indication.

12. Premier dispositif de réseau, le dispositif de réseau étant configuré pour mettre en œuvre le procédé selon l'une quelconque des revendications 1 à 6.

13. Deuxième dispositif de réseau, le dispositif de réseau étant configuré pour mettre en œuvre le procédé selon l'une quelconque des revendications 7 à 11.
